Europäisches Patentamt

European Patent Office

Office européen des brevets

(19)

(11) Publication number: **0 298 197**
**A1**

## (12) EUROPEAN PATENT APPLICATION

(21) Application number: **88103980.4**

(22) Date of filing: **14.03.88**

(51) Int. Cl.⁴: **B29D 22/00** , //B29K105/04

The title of the invention has been amended (Guidelines for Examination in the EPO, A-III, 7.3).

(30) Priority: **16.03.87 IT 8361387**

(43) Date of publication of application:
**11.01.89 Bulletin 89/02**

(84) Designated Contracting States:
**ES**

(71) Applicant: **Fugazzi, Fortunato**
**Via De Gasperi 10**
**I - 22076 Mozzate ( Como )(IT)**

(72) Inventor: **Fugazzi, Ferruccio**
**Via De Gasperi 10**
**I-22076 Mozzate (Como)(IT)**

(74) Representative: **Sassi, Romano**
**UFFICIO BREVETTI VARESINO Viale Belforte 89**
**I-21100 Varese(IT)**

(54) **Process for making three-dimensional hollow bodies whose deformability is controllable.**

(57) The process of making of three-dimensional bodies and shapes, substantially hollow, whose deformability and elasticity is controllable as a function of quantity and quality of at least a fluid present in at least one of its internal hollows, includes the provision of a sealed outer bag (1, 1') of substantially laminar material which is provided with an inlet as well as the provision of interwall connections (30, 30'), whereby to permit a limited expansion thereof and such that all over a wide range of pressures inside the bag (1, 1') the body expansion do not go beyond those foreseen or permitted. The covering or sealed bag of substantially laminar material is naturally provided by the skin resulting about a body of foamed resin being molded. The quantity and quality of at least a fluid (5) present in at least one of its internal hollows is controlled by at least an inlet and/or outlet valve (2) connectable to a fluid supplying device such as a pumping system.

FIG.1

EP 0 298 197 A1

**"Process of making of three-dimensional bodies and shapes, substantially hollow, whose deformability and elasticity is controllable as a function of quantity and quality of at least a fluid present in at least one of its internal hollows and bodies and shapes obtained with such process"**

The present invention relates to a process of making of three-dimensional bodies and shapes, substantially hollow, whose deformability and elasticity is controllable as a function of quantity and quality of at least a fluid present in at least one of its internal hollows. Moreover, the present invention relates three-dimensional bodies and shapes, substantially hollow, whose deformability and elasticity is controllable as a function of quantity and quality of at least a fluid present in at least one of its internal hollows and bodies and shapes obtained with such process.

In the present state of the art, three-dimensional bodies and shapes, substantially hollow are known in accordance with the prior art portion of claim 1 (Belgian Patent No. 773182) expand in a substantially casual, i.e., in an uncontrollable manner. Thus it was impossible to increase the fluid pressure therein without affecting the shape or to control their elasticity and yieldingness. Such uncontrollableness was preclusive to current use of this technology at least in all cases wherein a mathematically proportional increase or decrease of shape and/or dimension was requested in any direction with reference to the particular pressure of the filling means. The supply with fluid resulted in a rounding trend of shapes and hernia formation. Such defect could not be withstood when perfect flats and sharp corners were expected in the final body. With the known art it was impossible to increase the body in only one of the three dimensions.

The invention as claimed is intended to remedy these drawbacks. The inventor, with ingenious perception has conceived a process of making three-dimensional bodies and shapes extremely simple and efficacious whereby bodies and shapes comprised thereby are provided with characteristics of deformability, elasticity and pressure of the filling means which are widely controllable according parameters and/or scales which may be established in advance. Once determined the range of variability or invariability of shape or size of the body a discrimination of variables and the corresponding parameters; a project is provided which, every time may be provided with suitable means which range from stiff structures to elastic or deformable structures. Even the structure architecture may be harmonized with the particular effect to be provided. The basilar arrangement of bodies obtainable with the present invention comprises substantially at least an outer sealed covering provided with at least an inlet and with connections and/or linkings engaging the sections to be joined according a substantially experimental density and distribution. In most cases the process may provide an arrangement, whereby a base body of reduced dimension is prepared, wherein the sealed outer bag of substantially laminar material is comprised by the skin provided thereon, which results from foaming a resin whereby the interwall connection structure is comprised by the walls of the open cells of the final foamed body. Further results may be obtained by controlling the features of the material employed. According to a preferred embodiment of the present invention the quantity and quality of at least a fluid present in at least one of its internal hollows is controlled by at least an inlet and/or outlet valve connectable to a fluid supplying device such as a pumping system.

The dimensional and/or formal characteristics are related to those physical or mechanical characteristics in accordance with the following demonstrative formula:

I) in unloaded conditions:

$$D = D_0 + \frac{P * S}{(N * R) + R_i} \; ;$$

II) in loaded conditions:

$$D = D_0 + \frac{P * S}{(N * R) + R_i} - \frac{F_d + (N * R_1)}{(P * S) + R_{i1}} ;$$

wherein:

D is the resulting dimension;

$D_o$ is the starting dimension;

P is the fluid pressure;

S is the considered area;

N is the density of connections between the structure and the bag wall;

R is a compound of mechanical characteristics of the structure;

$R_i$ is a compound of mechanical characteristics of the envelope;

$F_d$ is the force or load applied on the considered area;

$R_l$ corresponds to R in presence of load;

$R_{ll}$ corresponds to Ri in presence of load.

One way of carrying out the invention is described in detail below with reference to drawings which illustrate two specific embodiments, in which:

Figure 1 is a schematic vertical cross section of a parallelepipedic body reinforced by a structure of wires having compressive strength substantially null and an extensibility substantially null too, in the attitude in which therein is provided a pressure such that a weight applied on same render a yielding thereof which may be determined, by a weight, in term of 3 mm.

Figure 2 is substantially a repetition of Figure 1 but in the attitude in which coeteris paribus a higher pressure resisting against the weight so that no yielding results.

Figure 3 is a detailed schematic cross section, molto particolare, of some micro-cells close to the bag skin wherein a reduced pressure is provided.

Figure 4 is substantially a repetition of Figure 3 whereas a higher pressure filling means results in expansion of same cells.

Figure 5 is substantially a repetition of figures 3 and 4 in presence of the same pressure as in figure 4 but with relatively reduced cells.

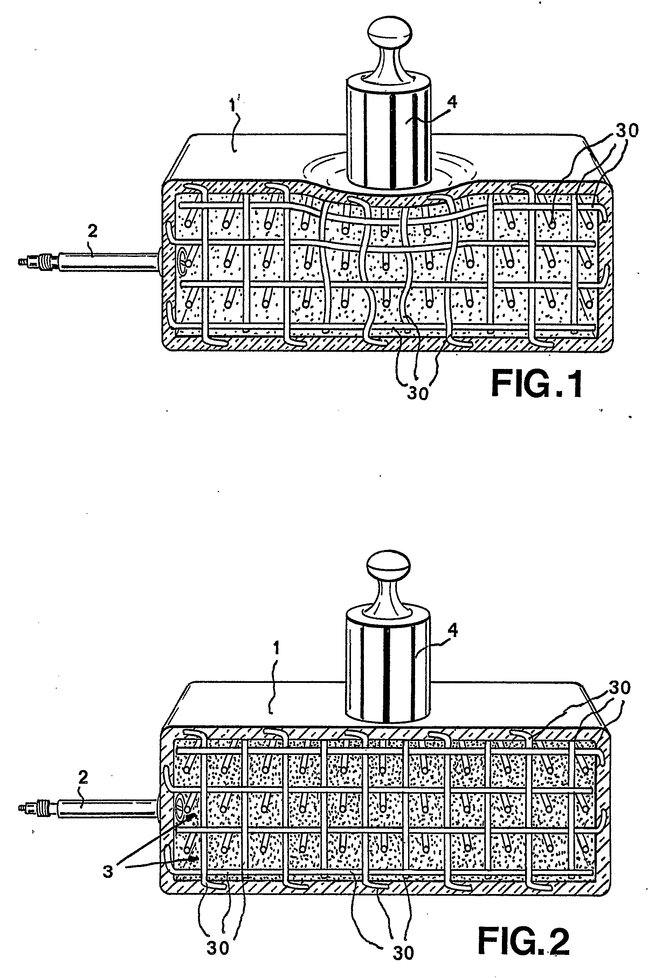

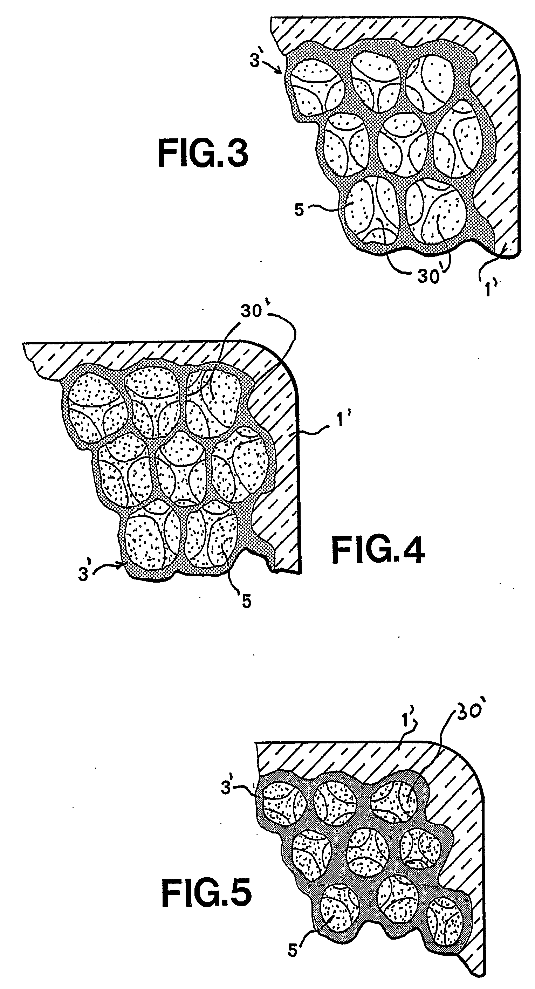

Referring now to the figures of the drawings a three-dimensional body, according to the present invention comprises an external covering 1 which is provided with an inlet-outlet valve 2. A structure 3 of wires 30 links the counterposed walls as the same wires are embedded by the covering 1. The wires 30 are set orthogonally in three directions, whereby the covering filled with air under the weight 4 yields about 3 mm. Whereas, in a condition as shown in figure 2 and with about twice the pressure the same weight 4 no yieldings result. According to a preferred embodiment of the present invention, figures 3, 4, 5, covering 1' includes the skin self-resulting on molded foamed resins and the structure 3' is comprised by the same foamed resin structure which in the embodiment shown in figures 3 and 4 is provided by cell walls 30' of relatively large dimensions which increasing the pressure of air 5 expands providing also an increase of the external dimension and shape. The latter occurring in a likeness range. Thus it will be appreciated that the cells 30' of figure 5 are larger but they keep the same shape. Whereas, when a higher pressure of the air 5 is needed and both the shape and dimensions are to be kept constant a structure of smaller cells 30' is to be provided (figure 5).

## Claims

1. Process of making three-dimensional bodies and shapes, substantially hollow, whose deformability and elasticity is controllable as a function of quantity and quality of at least a fluid present in at least one of its internal hollow or cell, characterized in that it includes the provision of a sealed outer bag (1, 1') of substantially laminar material which is provided with an inlet (2) as well as the provision of interwall connections (30, 30'), whereby to permit a limited expansion thereof and such that all over a wide range of pressure inside the bag the body expansion does not go beyond that foreseen or permitted.

2. Process of making three-dimensional bodies and shapes, , substantially, hollow, whose deformability and elasticity is controllable as a function of quantity and quality of at least a fluid present in at least one of its internal hollows, as claimed in claim 1, characterized in that the interwall connection structure (30, 30') linking inwardly, substantially centripetally, the walls of sealed outer bag (1, 1') of substantially laminar material comprise a single body or are interbed therebetween.

3. Process of making three-dimensional bodies and shapes, , substantially, hollow, whose deformability and elasticity is controllable as a function of quantity and quality of at least a fluid present in at least one of its internal hollows, as claimed in claim 2, characterized in that both the interwall connection structure (30, 30') linking inwardly, substantially centripetally, the walls of sealed outer bag (1, 1') of substantially laminar material and the latter are provided foaming a resin whereby the interwall connection structure is comprised by the walls (30') of the open cells of the final foamed body and the sealed outer bag (1') of substantially laminar material is comprised by the skin resulting thereon.

3

4. Process of making three-dimensional bodies and shapes, , substantially, hollow, whose deformability and elasticity is controllable as a function of quantity and quality of at least a fluid present in at least one of its internal hollows, as claimed in claim 3, characterized in that to assure a perfect sealing of sealed outer bag (1, 1') or envelope as well as to modify the physical or mechanical characteristics the body skin is covered and/or substituted by a layer of rubber or the like.

5. Process for making three-dimensional bodies and shapes, substantially hollow, whose deformability and elasticity is controllable as a function of quantity and quality of at least a fluid present in at least one of its internal hollows, as claimed in claim 1, characterized in that the quantity and quality of at least a fluid (5) present in at least one of its internal hollows (30') is controlled by at least an inlet and/or outlet valve (2) connectable to a fluid supplying device such as a pumping system.

6. Process for making three-dimensional bodies and shapes, substantially hollow, whose deformability and elasticity is controllable as function of quantity and quality of at least a fluid present in at least one of its internal hollows, as claimed in claim 1, characterized in that the interwall connection is provided by a structure (3) of wires (30) having a compression strength substantially null and an extensibility strength substantially null too.

7. Process for making three-dimensional bodies and shapes, substantially hollow, whose deformability and elasticity is controllable as a function of quantity and quality of at least a fluid present in at least one of its internal hollows, as claimed in claim 1, characterized in that the means whereby the air pressure is increased leaving unchanged the external form and dimensions are among the else; smaller open cells, structures and materials of different kind and consistency.

8. Process of making three-dimensional bodies and shapes, , substantially, hollow, whose deformability and elasticity is controllable as a function of quantity and quality of at least a fluid present in at least one of its internal hollows, as claimed in claim 2, characterized in that in such formula the dimensional and/or formal characteristics are related to those physical or mechanical characteristics in accordance with the following demonstrative formula:

$$D = D_0 + \frac{P * S}{(N * R) + R_i} \; ;$$

wherein:
D is the resulting dimension;
Do is the starting dimension;
P is the fluid pressure;
S is the considered area;
N is the density of connections between the structure and the bag wall;
R is a compound of mechanical characteristics of the structure (3);
Ri is a compound of mechanical characteristics of the envelope (1, 1').

9. Process of making three-dimensional bodies and shapes, substantially, hollow, whose deformability and elasticity is controllable as a function of quantity and quality of at least a fluid present in at least one of its internal hollows, as claimed in claim 8, characterized in that the parameters of dimensional and/or formal, and/or physical or mechanical characteristics of demonstrative formula are referred to corresponding parameters of a foaming process of at least one resin and components which participate to provide the final body as well as of the shape and dimensions of the molds used.

10. Process of making three-dimensional bodies and shapes, , substantially, hollow, whose deformability and elasticity is controllable as a function of quantity and quality of at least a fluid present in at least one of its internal hollows, as claimed in claim 9, characterized in that i parameters of the foaming process of at least a resin, significant to provide the final features in loaded and unloaded conditions are as follow: kind and rate of the resin, kind and rate of the expander, shape, dimension, mold temperature, time e permanency of material in the mold and/or modality of cooling, sealing and/or strengthening the outer envelope (1, 1').

11. Three-dimensional, bodies and shapes substantially hollow, whose deformability and elasticity is controllable as a function of quantity and quality of at least a fluid present in at least one of its internal hollows, characterized in that they are obtained by the process as claimed in claims from 1 to 10.

**FIG.1**

**FIG.2**

**FIG.3**

**FIG.4**

**FIG.5**